# EUROPEAN PATENT APPLICATION

(11) **EP 4 357 036 A1**
(43) Date of publication of application: **24.04.2024**
(21) Application number: 23383020.7
(22) Date of filing: 04.10.2023
(51) Int. Cl.: B08B 3/02, B60S 3/04

(54) **PALLET JACK WASHING MACHINE**

(30) Priority: 19.10.2022 ES 202231711
(71) Applicant: Dinox SL, 17844 Cornella de Terri Girona (ES)
(72) Inventor: Bach Coll, Josep, Girona (ES); Masanas Mir, Lluis, Gerona (ES)
(74) Representative: Pons

(57) **Abstract**

Pallet jack (2) washing machine (1), in particular of the forks (7) and wheels is described. It comprises a frame (3) with an upper portion (5) having two openings to receive the forks (7) of a pallet jack (2), an upper washing duct (10) with an upper arm (11) and with several nozzles (12) spraying liquid on the forks (7) and a blowing fan (13), and an underground lower portion (4) having a recirculation tank (16) connected to the washing chamber (8), a lower washing duct (14) with a lower arm (15) and several nozzles (12) spraying liquid on the forks (7) and a recirculation pump (17) for a washing fluid to the upper (10) and lower (14) washing ducts.

## Description

### OBJECT OF THE INVENTION

The present invention can be included within the technical field of machines for washing and disinfecting pallet jacks, particularly the forks and wheels thereof. More specifically, the object of the invention relates to a machine comprising a frame provided with a lower portion buried below a ground level and an upper portion projecting from said ground level, wherein the washing chamber is configured to receive a cleaning fluid which is sprayed by different jets disposed on arms which may be rotating, and the lower portion comprises a recirculation tank where the previously used washing fluid is recovered, so that it can be reused by passing it through a rotating filter and heating it in the tank with heating means for disinfection thereof.

### BACKGROUND OF THE INVENTION

There are no known machines in the state of the art for washing pallet jacks that are capable of effective and fast washing and drying, particularly of the forks, without wasting large quantities of water and without the danger of it penetrating the engine. In addition, there are no known machines of this type that can be located in the factory without taking up excessive space. Likewise, there are many known processes, guides and recommendations for cleaning the pallet jacks by operators, thus reducing their productivity and possibly the quality and homogeneity of the washing of these pallet jacks.

### DESCRIPTION OF THE INVENTION

The present invention is intended to solve some of the problems mentioned in the prior art. More specifically, the present invention discloses a pallet jack washing machine, comprising a frame provided with a lower portion buried below a ground level and an upper portion projecting from said ground level.

The upper portion may comprise two openings designed to receive the forks of a pallet jack, wherein said openings are adjacent and provide access for the forks to a washing chamber inside the frame.

The washing chamber may be provided with a support surface for the forks, said surface provided with at least one portion with a meshed portion or at least one open portion communicating with the lower portion. Preferably, there are two slats or arms extending at a location parallel to and below each of the forks, each slat or arm separated from each other by a clearance.

Preferably, the machine in the upper portion comprises an upper washing duct channelling a cleaning fluid, wherein said duct comprises at least one upper arm provided with one or more nozzles configured to spray the washing fluid onto the forks disposed inside the washing chamber.

It can also have a plurality of arms, each provided with spray nozzles. At least one upper arm may be attached to a rotating element coupled to the frame, such that it allows rotation of said arm within the housing through a horizontal plane.

In a preferred embodiment, all rotating arms rotate during the washing cycle.

In addition, the machine may be provided with an upper rinsing bar and/or a lower rinsing bar, each rinsing bar having nozzles welded thereto, said rinsing bars being static and non-rotating.

In an upper portion, the machine may comprise a blower fan in fluid communication with the washing chamber. The blower fan may be disposed in a sealed upper compartment above the washing chamber. The blower fan can be equipped with two side lips that channel the air to opposite ends to sweep each of the forks, preferably at the end of the washing process and shortly before or at the moment of pallet jack extraction.

Likewise, the lower portion of the machine that is buried below ground level can have an open recirculation tank connected to the washing chamber, so that it receives and holds the washing fluid used.

Preferably, a recirculation pump in fluid communication with the open tank is configured to recirculate the washing fluid to the upper washing duct and/or to a lower washing duct.

The machine may be provided with a lower washing duct that channels the cleaning fluid to at least one lower arm provided with one or more nozzles configured to spray the washing fluid onto the forks inside the washing chamber.

It can also have a plurality of lower arms, each equipped with spray nozzles. At least one lower arm may be attached to a rotating element coupled to the housing, such that it allows rotation of said lower arm within the housing through a horizontal plane.

Preferably the machine comprises a plurality of lower arms coupled to a rotating element and, therefore, in use, configured to rotate about their own cross axis. Similarly, the machine may be provided with one or more upper arms coupled to a rotating element and, therefore, in use, configured to rotate about its own cross axis.

In a preferred embodiment, the machine is provided with an upper rinsing bar and a lower rinsing bar comprising oriented nozzles welded to them, for the performance of the rinsing/disinfecting process, which is carried out with water from the mains, this water is evacuated to the recirculation tank for the renewal of the water used. The rinsing bars may be static and non-rotating.

In order to recycle the water used, the machine may have a number of recirculation and purification and/or disinfection elements. In a preferred embodiment, the machine comprises at least one heating element configured to heat the washing liquid of the tank. It may also be equipped with a number of heating elements in close contact with the fluid housed in the recirculation tank.

The machine can also be equipped with a cleaning filter connected to the recirculation pump. Preferably, the cleaning filter is a self-cleaning rotary filter coupled to a motor, with an external drum solidly joined to an internal shaft which in turn comprises at least one cleaning nozzle.

Preferably, the filter is disposed in a compartment separate from the lower portion of the frame and in communication with the suction of the recirculation pump. The feed pump and the motor feeding the rotary filter can be disposed in a sealed compartment and the filter in a compartment in fluid communication with the recirculation tank.

In a preferred embodiment, the machine comprises externally and at the entrance of the pallet jacks, i.e. adjacent to the openings, a system of tilting brushes, with an interior with water and disinfectant, to clean the drive wheel of the pallet jack, as this does not enter inside the cabinet, and thus avoiding wetting the electrical part of the pallet jack.

### DESCRIPTION OF THE DRAWINGS

To supplement the description being given and with the aim of promoting a better understanding of the characteristics of the invention, in accordance with a preferred example of a practical embodiment of the same, a set of drawings are provided as an integral part of the description in which, for merely illustrative purposes, the following has been represented:
Figure 1.- Shows a side view of the interior of the pallet jack washing machine according to the present invention, illustrating a frame provided with a lower portion buried below a floor level and an upper portion projecting from the floor level.
Figure 2.- Shows a front view of the interior of the pallet jack washing machine according to the present invention, illustrating the blowing fan, the lower and upper washing duct, the arms, the heating elements, among other elements of the present invention.
Figure 3.- Shows a view of the interior of the machine of the present intention from a side opposite to the view in Figure 1, where the rotary filter coupled to a motor and in fluid communication with the recirculation pump is illustrated.
Figure 4.- Shows a view of a rear perspective of the machine according to the present invention, illustrating the pallet jack with the parent wheel placed on top of the tilting brush plate and the forks inside the frame.

### PREFERRED EMBODIMENT OF THE INVENTION

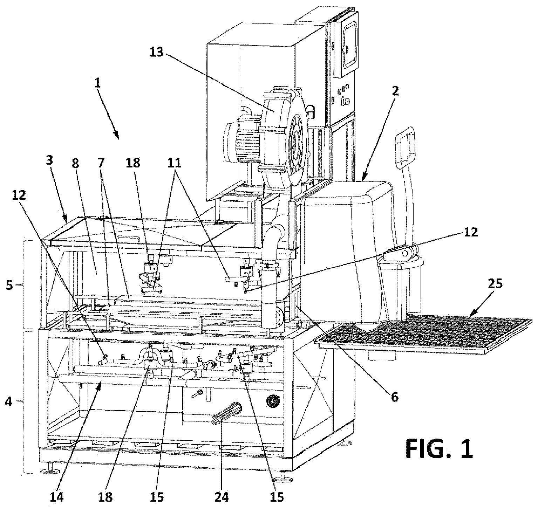

A pallet jack washing machine according to a preferred embodiment of the present invention is described below with the aid of Figures 1-3.

More specifically, as shown in figure 1, the object of the present invention relates to a pallet jack (1) washing machine (2), comprising a frame (3) provided with a lower portion (4) buried below a ground level and an upper portion (5) projecting from said ground level.

In the preferred embodiment, the machine (1) comprises two openings (6) designed to receive the forks (7) of a pallet jack (2), where said openings (6) are adjacent and act as access to the forks (7) to a washing chamber (8) inside the frame (3).

In the preferred embodiment of figure 1, it is illustrated that the machine (1) comprises a tilting brush plate (25) adjacent the openings (6), said tilting brush plate (25) configured to perform the cleaning of the driving wheel, while the front wheels are cleaned inside the frame (3).

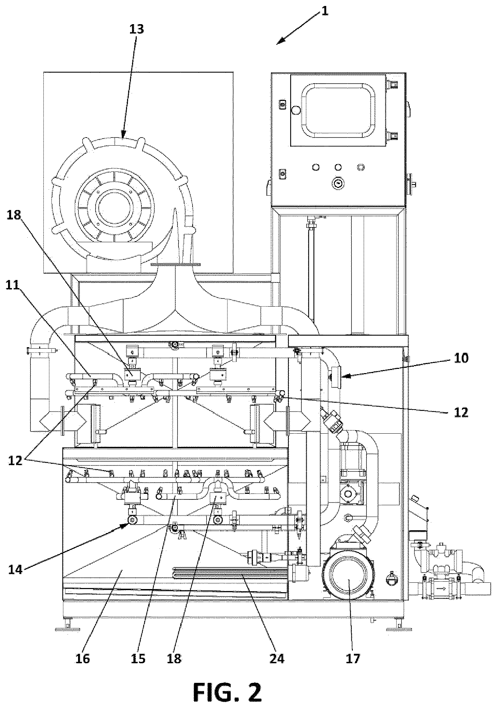

As shown in Figure 2, an upper washing duct (10) channels a washing fluid and flows into at least one upper arm (11) fluidly communicating with the upper washing duct (10), said upper arm (11) provided with one or more nozzles (12) configured to spray the washing fluid onto the forks (7) disposed inside the washing chamber (8). Each upper arm (11) may have a curved shape with ends disposed at an angle, or may have a straight configuration with ends that are curved or projecting with angled edges, such that the nozzles spray a jet in different and predetermined directions onto the forks (7) of the pallet jack (2). Each upper arm (11) is attached to a rotating element (18) or bearing which is coupled to the frame (3), allowing the rotation of said upper arm (11) on horizontal plane, i.e. rotating around the vertical axis.

Figure 2 also shows that the machine (1) includes a blowing fan (13) in fluid communication with the washing chamber (8), said fan being arranged inside a sealed upper compartment and provided with two lips that channel the air to opposite ends to sweep each of the forks (7), preferably at the end of the washing process and shortly before or at the time of removal of the pallet jack (2).

Also, Figure 2 shows that the machine comprises a recirculation tank (16) connected to the washing chamber (8) that receives and holds the washing fluid. It further comprises a recirculation pump (17) in fluid communication with the recirculation tank (16), wherein said recirculation pump (17) is configured to recirculate the washing fluid to the upper washing duct (10) and/or the lower washing duct (14).

The machine (1) may preferably also be provided with a lower washing duct (14) channelling the cleaning fluid, wherein said lower washing duct (14) comprises at least one lower arm (15) provided with one or more nozzles (12) configured to spray the washing fluid onto the forks (7) inside the washing chamber (8). The lower arms (15) may be configured to rotate the same as the upper arms (11). Also, the lower arms (15) may have any configuration, for example curved, U-shaped, L-shaped, or a symmetrical or asymmetrical configuration, which allows the nozzles to spray jets in predetermined directions and angles as preferable to effect the washing of the forks (7).

In the preferred embodiment described by the figures, the machine (1) also includes rinsing bars with nozzles welded to them, where said rinsing bars are not rotating and are fed by mains water, so that in each wash a portion of mains water is used in the rinsing and disinfection stage, water that is evacuated to the recirculation tank to be recirculated and reused.

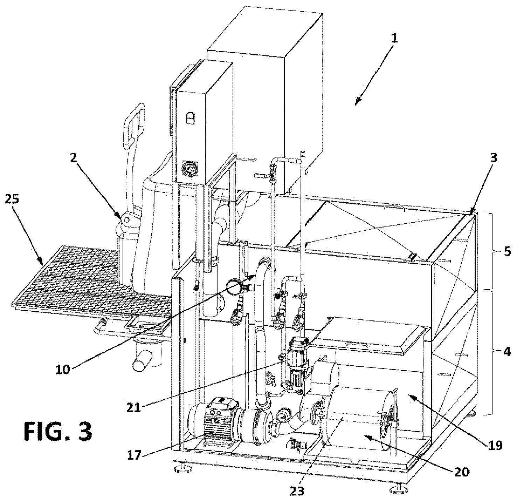

Figure 3 shows a side view which is opposite to that represented by figure 1, so as to illustrate a rear compartment (19) in the lower portion (4) comprising, a rotary cleaning filter (20) attachable to a motor (21), said rotary filter (20) disposed in communication with the suction of the recirculation pump (17).

Said rotary filter may be of the type comprising a drum and an inner shaft (23) solidly joined to said drum, wherein the inner shaft is operatively connected to a rod provided with inner washing nozzles.

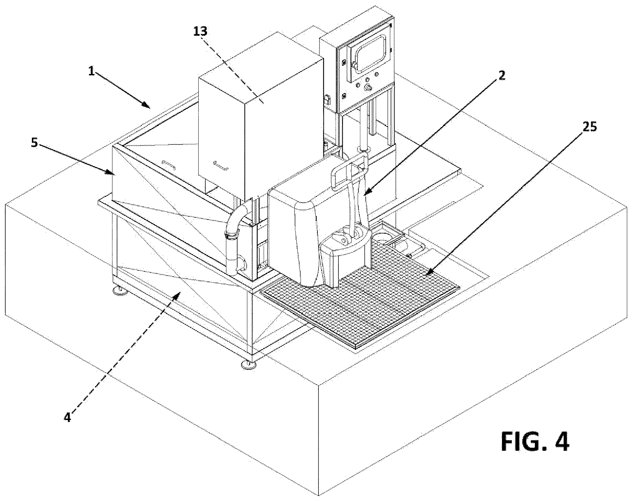

Figure 4 shows a view of a rear perspective of the machine (1) of the preferred embodiment being described, where the pallet jack (2) disposed on the tilting brush plate (25) for cleaning the drive wheel is illustrated. Also, the lower portion (4) of the frame (3) that is buried and the upper portion (5) that extends from the ground are clearly visible.

## Claims

1. Pallet jack (2) washing machine (1), **characterised in that it** comprises a frame (3) provided with lower portion (4) buried below a ground level and an upper portion (5) projecting from said ground level, wherein the upper portion (5) comprises:
- two openings (6) designed to receive the forks (7) of a pallet jack (2), wherein said openings (6) are adjacent and act as access for the forks (7) to a washing chamber (8) inside the frame (3),
- an upper washing duct (10) channelling a cleaning fluid, wherein said upper duct (10) comprises at least one upper arm (11) provided with one or more nozzles (12) configured to spray the washing fluid on the forks (7) disposed inside the washing chamber (8),
- a blower fan (13) in fluid communication with the washing chamber (8), and
the lower portion (4) comprises:
- a recirculation tank (16) connected to the washing chamber (8) which receives and holds the washing fluid,
- a lower washing duct (14) channelling a cleaning fluid, wherein said lower washing duct (14) comprises at least one lower arm (15) provided with one or more nozzles (12) configured to spray the washing fluid onto the forks (7) inside the washing chamber (8),
- a recirculation pump (17) in fluid communication with the recirculation tank (16), wherein said recirculation pump (17) is configured to recirculate the washing fluid to the upper washing duct (10) and/or the lower washing duct (14).

2. The pallet jack washing machine (1) of claim 1, wherein the upper arm (11) is attached to a rotating element (18) coupled to the frame (3), which allows the upper arm (11) to rotate through a horizontal plane.

3. The pallet jack washing machine (1) of claim 1 or 2, comprising a plurality of upper arms (11).

4. The pallet jack washing machine (1) of claim 1, wherein the lower arm (15) is attached to a rotary coupling (18) coupled to the frame (3), which allows the lower arm (15) to rotate within the frame (3) through a horizontal plane.

5. The pallet jack washing machine (1) of claim 1 or 4, comprising a plurality of lower arms (15).

6. The pallet jack washing machine (1) of claim 1, wherein the lower portion (4) further comprises a separate compartment (19) provided with a rotary cleaning filter (20) attachable to a motor (21), said rotary filter (20) disposed in communication with the suction of the recirculation pump (17).

7. The pallet jack washing machine (1) of claim 6, wherein the rotary filter comprises a drum and an inner shaft solidly joined to said drum, wherein the inner shaft is operatively connected to a rod provided with inner washing nozzles.

8. The pallet jack washing machine of claim 1, comprising at least one heating element (24) configured to heat the washing liquid in the recirculation tank (16).

9. The pallet jack washing machine of claim 1, comprising a tilting brush plate (25) adjacent to the openings (6) for washing the drive wheel of the pallet jack.
